(19) Europäisches Patentamt / European Patent Office / Office européen des brevets

(11) **EP 3 606 279 A1**

(12) **EUROPEAN PATENT APPLICATION**
published in accordance with Art. 153(4) EPC

(43) Date of publication:
**05.02.2020 Bulletin 2020/06**

(51) Int Cl.:
***H04W 76/20*** (2018.01)   ***H04W 72/04*** (2009.01)

(21) Application number: **17905983.7**

(22) Date of filing: **18.04.2017**

(86) International application number:
**PCT/CN2017/080965**

(87) International publication number:
**WO 2018/191868 (25.10.2018 Gazette 2018/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **REN, Zhanyang**
  **Shenzhen**
  **Guangdong 518129 (CN)**

• **LI, Zhenyu**
  **Shenzhen**
  **Guangdong 518129 (CN)**
• **HAN, Jinxia**
  **Shenzhen**
  **Guangdong 518129 (CN)**
• **ZHANG, Wurong**
  **Shenzhen**
  **Guangdong 518129 (CN)**

(74) Representative: **Gill Jennings & Every LLP**
**The Broadgate Tower**
**20 Primrose Street**
**London EC2A 2ES (GB)**

(54) **METHOD AND DEVICE FOR INDICATING SUBFRAME CONFIGURATION**

(57)    A subframe configuration indication method and an apparatus are provided to increase a success rate of demodulating information by a terminal device. The subframe configuration indication method includes: determining, by a network device, a quantity of downlink symbols included in an $(n+N)^{th}$ subframe, where N is an integer greater than or equal to 2, and n is an integer greater than or equal to 0; and sending, by the network device in both a control region and a data region of an $n^{th}$ subframe, downlink control information DCI through downlink control channels, where the DCI is used to indicate the quantity of downlink symbols included in the $(n+N)^{th}$ subframe.

FIG. 4

**Description**

**TECHNICAL FIELD**

Embodiments of the present invention relate to the field of communications technologies, and in particular, to a subframe configuration indication method and an apparatus.

**BACKGROUND**

The MF alliance (MulteFire Alliance, MFA) specifies, based on a long term evolution (Long Term Evolution, LTE) release (Release) 14 specification, an operating mechanism of a standalone system on an unlicensed spectrum, and a corresponding specification is MF 1.0.

Because the standalone system works in many scenarios requiring deep coverage, for example, a factory, a port, and a warehouse, the MFA has established a work item (Work Item, WI) on wideband coverage extension (Wideband Coverage Extension, WCE) in an evolved specification MF 1.1 of the MF 1.0.

Because a spectrum regulation limits transmit power on the unlicensed spectrum, downlink channel coverage in the WCE is limited relative to that of an uplink channel. Therefore, currently, coverage extension of a downlink channel is focused. According to a current conclusion of the MFA, an operating point of an MF 1.1 downlink channel needs to be increased by 8 dB on a basis of an operating point of an MF 1.0 downlink channel, that is, a signal to interference plus noise ratio (Signal to Interference plus Noise Ratio, SINR) of a downlink channel that an MF 1.1 device can detect needs to be reduced by 8 dB. Obviously, an MF 1.1 terminal device requires a lower downlink channel SINR than an MF 1.0 terminal device.

Consequently, a problem is caused. If a base station sends information through the MF 1.0 downlink channel, for example, sending downlink control information (Downlink Control Information, DCI) through an MF 1.0 downlink control channel, because an SINR of an operating point of the MF 1.0 downlink control channel is higher, the MF 1.1 terminal device cannot demodulate the DCI sent through the MF 1.0 downlink control channel, and consequently, the MF 1.1 terminal device misses information.

**SUMMARY**

Embodiments of the present invention provide a subframe configuration indication method and an apparatus, so as to increase a success rate of demodulating information by a terminal device.

According to a first aspect, a subframe configuration indication method is provided. The method may be performed by a network device, and specifically, may be performed by a communications apparatus of the network device. The network device is, for example, a base station, and the communications apparatus may be the network device itself or a function module of the network device. The method includes: determining, by the network device, a quantity of downlink symbols included in an $(n+N)^{th}$ subframe; and sending, by the network device in both a control region and a data region of an $n^{th}$ subframe, DCI through downlink control channels, where n is an integer greater than or equal to 0, N is an integer greater than or equal to 2, and the DCI is used to indicate the quantity of downlink symbols included in the $(n+N)^{th}$ subframe.

In this embodiment of the present invention, the network device sends, in both the control region and the data region, the DCI through the downlink control channels. This is equivalent to that more physical resources are allocated to the downlink control channels. Therefore, coverage extension is implemented. For an MF 1.1 terminal device, downlink control channel DCI may be obtained through demodulation by using both a downlink control channel in a control region and an extended downlink control channel, thereby increasing a success rate of demodulating information by the terminal device.

In addition, because coverage extension is performed, the downlink control channel is extended in the entire subframe n for sending. In the $n^{th}$ subframe, if a quantity of downlink symbols included in the $n^{th}$ subframe is indicated, or a quantity of downlink symbols included in an $(n+1)^{th}$ subframe is indicated, a terminal device on which coverage extension is performed cannot process information carried on the extended downlink control channel until a start point of the $(n+1)^{th}$ subframe. Considering impact of an algorithm, a latency, or the like, even if the terminal device can correctly demodulate DCI, the terminal device may miss an effective time point of a symbol indicated by the DCI. For example, when the $n^{th}$ subframe or the $(n+1)^{th}$ subframe indicated by the DCI is a special subframe, the terminal device needs to perform downlink-to-uplink switch in the special subframe. However, because the terminal device does not perform timely processing, the terminal device cannot perform downlink-to-uplink switch at a correct location. Consequently, system exception may be caused. Considering this, in this embodiment of the present invention, the network device indicates, in the $n^{th}$ subframe, the quantity of downlink symbols included in the $(n+N)^{th}$ subframe, where N is greater than or equal to 2. In this way, it can be ensured that the terminal device demodulates the DCI in time, and a probability of system exception is reduced.

In a possible design, the DCI indicates, by using a reserved bit in the DCI, the quantity of downlink symbols included in the (n+N)th subframe.

In order to be compatible with an MF 1.0 terminal device, a reserved field is set in DCI. Currently, the reserved field is not used. Therefore, in this embodiment of the present invention, the reserved field is used to indicate the quantity of downlink symbols included in the (n+N)th subframe, thereby improving resource utilization. For example, the reserved field includes four bits, and in this embodiment of the present invention, at least one of the four bits may be used to indicate the quantity of downlink symbols included in the (n+N)th subframe. A specific quantity of bits used to indicate the quantity of downlink symbols included in the (n+N)th subframe is not limited in this embodiment of the present invention.

In a possible design, the quantity of downlink symbols included in the (n+N)th sub frame is less than a first preset threshold. The first preset threshold is a quantity of downlink symbols included in one complete subframe.

If the quantity of downlink symbols included in the (n+N)th subframe is less than the first preset threshold, it indicates that the (n+N)th subframe is an incomplete subframe. If the (n+N)th subframe is an incomplete subframe, the (n+N)th subframe may be a special subframe. The terminal device needs to complete downlink-to-uplink switch at an uplink switch point of the special subframe. If the DCI sent in the nth subframe indicates a quantity of downlink symbols included in a current subframe or a next subframe, and if the current subframe or the next subframe is a special subframe, the terminal device may not have enough time to completely demodulate the received DCI when an uplink switch point of the special subframe arrives. Consequently, the terminal device may miss the uplink switch point, that is, cannot complete downlink-to-uplink switch at the uplink switch point. Consequently, system disorder may be caused. Therefore, in this embodiment of the present invention, the network device notifies the terminal device of the quantity of downlink symbols included in the (n+N)th subframe at least two subframes in advance. In this way, the terminal device has enough time to perform downlink-to-uplink switch, thereby ensuring normal system operation.

In a possible design, the one complete subframe is an extended cyclic prefix subframe, and in this case, the first preset threshold is 12; or the one complete subframe is a normal cyclic prefix subframe, and in this case, the first preset threshold is 14.

12 or 14 herein is merely an example and is a quantity that is determined based on a subframe of a different type and that is of symbols included in a complete subframe. When types of subframes are different, a value of the first preset threshold may be different, and may be specifically determined according to a protocol or a standard. This is not limited in this embodiment of the present invention.

In a possible design, the network device may further determine that an (n+N+1)th subframe is an uplink subframe.

The (n+N+1)th subframe may be a separate uplink subframe, or may be the first uplink subframe included in a UL burst. Generally, a subframe followed by an uplink subframe or a UL burst is a special subframe. Therefore, if the base station determines that the (n+N+1)th subframe is an uplink subframe or a first uplink subframe included in a UL burst, that is, determines that the (n+N)th subframe is a special subframe, the base station may send, in both a control region and a data region of the nth subframe, CPDCCH DCI to the terminal device, so that the terminal device can demodulate the DCI in time.

According to a second aspect, a subframe configuration indication method is provided. The method may be performed by a terminal device, and specifically, may be performed by a communications apparatus of the terminal device. The communications apparatus may be the terminal device itself or a function module of the terminal device. The method includes: receiving, by the terminal device in both a control region and a data region of an nth subframe, DCI through downlink control channels; and determining, by the terminal device based on the DCI, a quantity of downlink symbols included in an (n+N)th subframe, where n is an integer greater than or equal to 0 and N is an integer greater than or equal to 2.

The method provided in the second aspect may be understood as a method corresponding to the method provided in the first aspect. In other words, the method provided in the first aspect describes processing of the network device, and the method provided in the second aspect describes processing of the corresponding terminal device.

In a possible design, the determining, by the terminal device based on the DCI, a quantity of downlink symbols included in an (n+N)th subframe includes: determining, by the terminal device based on an indication of a reserved bit in the DCI, the quantity of downlink symbols included in the (n+N)th subframe.

As described in the first aspect, the network device may use a reserved field in the DCI to indicate the quantity of downlink symbols included in the (n+N)th subframe. Therefore, the terminal device may determine, by using a reserved field in the received DCI, the quantity of downlink symbols included in the (n+N)th subframe. In this indication manner, resource utilization is improved, and the manner is relatively simple and easy to implement.

In a possible design, the terminal device further determines a location of the (n+N)th subframe based on uplink subframe offset information carried in the DCI. The uplink subframe offset information is used to indicate a value of N.

If N is not a fixed value. For example, if the network device sends CPDCCH DCI to the terminal device when determining that an (n+N+1)th subframe is a first uplink subframe included in a UL burst, N may not be a fixed value. In this case, in addition to determining, based on the reserved field, the quantity of downlink symbols included in the (n+N)th

subframe, the terminal device needs to determine the location of the (n+N)th subframe based on another field, that is, determine the value of N. Therefore, in this embodiment of the present invention, the DCI may further carry the uplink subframe offset information, and the location of the (n+N)th subframe may be indicated by using the uplink subframe offset information. In this case, the terminal device may determine the location of the (n+N)th subframe based on the uplink subframe offset information in the received DCI. Therefore, the network device may configure, two or more subframes in advance, the quantity of downlink symbols that is indicated by the DCI, that is, notify the terminal device a specific quantity of subframes in advance, where the specific quantity of subframes is not limited to two. This is more flexible for the network device.

In a possible design, the quantity of downlink symbols included in the (n+N)th subframe is less than a first preset threshold. The first preset threshold is a quantity of downlink symbols included in one complete subframe.

In a possible design, the one complete subframe is an extended cyclic prefix subframe, and in this case, the first preset threshold is 12; or the one complete subframe is a normal cyclic prefix subframe, and in this case, the first preset threshold is 14.

In a possible design, the terminal device determines that an (n+N+1)th subframe is an uplink subframe.

For example, if N is not a fixed value, in addition to determining, based on the reserved field, the quantity of downlink symbols included in the (n+N)th subframe, the terminal device determines the location of the (n+N)th subframe based on the another field. In this way, the terminal device can determine that the (n+N+1)th subframe is an uplink subframe. If the (n+N+1)th subframe is the first uplink subframe included in the UL burst, the terminal device can further determine the UL burst.

According to a third aspect, a subframe configuration indication method is provided. The method may be performed by a network device, and specifically, may be performed by a communications apparatus of the network device. The network device is, for example, a base station, and the communications apparatus may be the network device itself or a function module of the network device. The method includes: determining, by the network device, a quantity of downlink symbols included in an (n+N)th subframe; and sending, by the network device in a data region of an nth subframe, first DCI through a downlink control channel, where N is an integer greater than or equal to 2, n is an integer greater than or equal to 0, and the first DCI is used to indicate the quantity of downlink symbols included in the (n+N)th subframe.

The first DCI is equivalent to DCI redesigned for an MF 1.1 terminal device, and DCI sent in a control region is DCI designed for an MF 1.0 terminal device. In this case, if the network device needs to send DCI to the MF 1.1 terminal device, the network device does not need to send the DCI in both a control region and a data region, but needs to send the DCI in only the data region. Therefore, a transmission resource is saved.

In a possible design, a quantity of bits that are in the first DCI and that are used to indicate the quantity of downlink symbols included in the (n+N)th subframe is less than a second preset threshold.

In this embodiment of the present invention, in the first DCI, the quantity of downlink symbols included in the (n+N)th subframe may be indicated by using three bits or fewer bits. A specific quantity of occupied bits is related to an indication manner. In other words, the quantity of bits that are in the first DCI and that are used to indicate the quantity of downlink symbols included in the (n+N)th subframe is less than the second preset threshold, and the second preset threshold may be a quantity of bits occupied by a subframe configuration for LAA or MF field in DCI compatible with the MF 1.0 terminal device, for example, 4. It can be learned that by using the first DCI, the quantity of downlink symbols included in the (n+N)th subframe is indicated, and the transmission resource is saved.

In a possible design, the network device sends, in a control region of the nth subframe, second DCI through a downlink control channel. The first DCI and the second DCI are in different formats.

In this embodiment of the present invention, it is equivalent to that DCI: the first DCI is redesigned for the MF 1.1 terminal device, and it is not necessary to consider that the first DCI needs to be compatible with the MF 1.0 terminal device. In this case, when sending the DCI, the network device may consider terminal devices of different types. For example, when needing to send the DCI to the MF 1.0 terminal device, the network device may send the DCI to the MF 1.0 terminal device through the downlink control channel in the control region, and the DCI sent in the control region is referred to as the second DCI hereinafter. When needing to send the DCI to the MF 1.1 terminal device, the network device may send the first DCI to the MF 1.1 terminal device through the downlink control channel in the data region. The first DCI and the second DCI may be sent in one subframe, for example, the nth subframe, or may be sent in different subframes. Sending times and a sending sequence of the first DCI and the second DCI are not limited in this embodiment of the present invention. In conclusion, the first DCI and the second DCI are two separate parts that do not interfere with each other, so that it is more convenient for the network device to perform management. In addition, because the first DCI is specifically designed for the MF 1.1 terminal device, the first DCI and the second DCI are in different formats.

In a possible design, a length of the first DCI is less than a length of the second DCI.

The second DCI is the DCI corresponding to the MF 1.1 terminal device. The second DCI includes a reserved field, but the first DCI may not include a reserved field. The reason is that the reserved field is kept in the second DCI for compatibility consideration, that is, for compatibility with the MF 1.0 terminal device. However, in this embodiment of the present invention, compatibility is no longer considered. Therefore, the reserved field does not need to be kept in the first DCI. For the length of the second DCI, a payload length decreases. Therefore, resource waste is reduced and a bit rate is reduced. Further, this can implement coverage extension.

According to a fourth aspect, a subframe configuration indication method is provided. The method may be performed by a terminal device, and specifically, may be performed by a communications apparatus of the terminal device. The communications apparatus may be the terminal device itself or a function module of the terminal device. The method includes: receiving, by the terminal device in a data region of an $n^{th}$ subframe through a downlink control channel, first downlink control information DCI sent by a network device; and determining, by the terminal device based on the first DCI, a quantity of downlink symbols included in an $(n+N)^{th}$ subframe, where n is an integer greater than or equal to 0, and N is an integer greater than or equal to 2.

The method provided in the fourth aspect may be understood as a method corresponding to the method provided in the third aspect. In other words, the method provided in the third aspect describes processing of the network device, and the method provided in the fourth aspect describes processing of the corresponding terminal device.

In a possible design, the terminal device determines a location of the $(n+N)^{th}$ subframe based on uplink subframe offset information carried in the first DCI. The uplink subframe offset information is used to indicate a value of N.

As described in the third aspect, in addition to indicating the quantity of downlink symbols included in the $(n+N)^{th}$ subframe, the first DCI may indicate the value of N by using the uplink subframe offset information. After receiving the first DCI, the terminal device may determine the value of N based on the uplink subframe offset information carried in the first DCI. This manner is relatively simple.

In a possible design, a quantity of bits that are in the first DCI and that are used to indicate the quantity of downlink symbols included in the $(n+N)^{th}$ subframe is less than a second preset threshold.

In a possible design, the terminal device receives, in a control region of the $n^{th}$ subframe through a downlink control channel, second DCI sent by the network device. The first DCI and the second DCI are in different formats.

As described in the third aspect, for example, when needing to send DCI to an MF 1.0 terminal device, the network device may send the second DCI to the MF 1.0 terminal device through the downlink control channel in the control region, and then the MF 1.0 terminal device or an MF 1.1 terminal device may receive the second DCI in the control region. When needing to send DCI to an MF 1.1 terminal device, the network device may send the first DCI to the MF 1.1 terminal device through the downlink control channel in the data region, and then the MF 1.1 terminal device may receive the first DCI in the data region. If the first DCI and the second DCI are sent in one subframe, the terminal device receives the first DCI and the second DCI in one subframe. Alternatively, if the first DCI and the second DCI are sent in different subframes, the terminal device receives the first DCI and the second DCI in different subframes. This is not limited in this embodiment of the present invention.

In a possible design, a length of the first DCI is less than a length of the second DCI.

According to a fifth aspect, a communications apparatus is provided. The communications apparatus has functions for implementing the network device in the method designs. These functions may be implemented by hardware, or may be implemented by hardware executing corresponding software. The hardware or the software includes one or more units corresponding to the functions.

In a possible design, a specific structure of the communications apparatus may include a processing unit and a sending unit. The processing unit and the sending unit may execute corresponding functions in the method provided in the first aspect or any possible design of the first aspect.

According to a sixth aspect, a communications apparatus is provided. The communications apparatus has functions for implementing the terminal device in the method designs. These functions may be implemented by hardware, or may be implemented by hardware executing corresponding software. The hardware or the software includes one or more units corresponding to the functions.

In a possible design, a specific structure of the communications apparatus may include a processing unit and a receiving unit. The processing unit and the receiving unit may execute corresponding functions in the method provided in the second aspect or any possible design of the second aspect.

According to a seventh aspect, a communications apparatus is provided. The communications apparatus has functions for implementing the network device in the method designs. These functions may be implemented by hardware, or may be implemented by hardware executing corresponding software. The hardware or the software includes one or more units corresponding to the functions.

In a possible design, a specific structure of the communications apparatus may include a processing unit and a sending unit. The processing unit and the sending unit may execute corresponding functions in the method provided in the third aspect or any possible design of the third aspect.

According to an eighth aspect, a communications apparatus is provided. The communications apparatus has functions for implementing the terminal device in the method designs. These functions may be implemented by hardware, or may be implemented by hardware executing corresponding software. The hardware or the software includes one or more units corresponding to the functions.

In a possible design, a specific structure of the communications apparatus may include a processing unit and a receiving unit. The processing unit and the receiving unit may execute corresponding functions in the method provided in the fourth aspect or any possible design of the fourth aspect.

According to a ninth aspect, a communications apparatus is provided. The communications apparatus may be a network device or a function module such as a chip that is disposed on the network device. The communications apparatus includes: a memory configured to store computer executable program code, a communications interface, and a processor. The processor is coupled with the memory and the communications interface. The program code stored in the memory includes an instruction, and when the processor executes the instruction, the instruction enables the communications apparatus to perform the method performed by the network device in the first aspect or any possible design of the first aspect.

According to a tenth aspect, a communications apparatus is provided. The communications apparatus may be a terminal device or a function module such as a chip that is disposed on the terminal device. The communications apparatus includes: a memory configured to store computer executable program code, a communications interface, and a processor. The processor is coupled with the memory and the communications interface. The program code stored in the memory includes an instruction, and when the processor executes the instruction, the instruction enables the communications apparatus to perform the method performed by the terminal device in the second aspect or any possible design of the second aspect.

According to an eleventh aspect, a communications apparatus is provided. The communications apparatus may be a network device or a function module such as a chip that is disposed on the network device. The communications apparatus includes: a memory configured to store computer executable program code, a communications interface, and a processor. The processor is coupled with the memory and the communications interface. The program code stored in the memory includes an instruction, and when the processor executes the instruction, the instruction enables the communications apparatus to perform the method performed by the network device in the third aspect or any possible design of the third aspect.

According to a twelfth aspect, a communications apparatus is provided. The communications apparatus may be a terminal device or a function module such as a chip that is disposed on the terminal device. The communications apparatus includes: a memory configured to store computer executable program code, a communications interface, and a processor. The processor is coupled with the memory and the communications interface. The program code stored in the memory includes an instruction, and when the processor executes the instruction, the instruction enables the communications apparatus to perform the method performed by the terminal device in the fourth aspect or any possible design of the fourth aspect.

According to a thirteenth aspect, a computer storage medium is provided. The computer storage medium is configured to store a computer software instruction used by the communications apparatus described in the fifth aspect or the communications apparatus described in the ninth aspect, and includes a program designed for the network device to execute the first aspect or any possible design of the first aspect.

According to a fourteenth aspect, a computer storage medium is provided. The computer storage medium is configured to store a computer software instruction used by the communications apparatus described in the sixth aspect or the communications apparatus described in the tenth aspect, and includes a program designed for the terminal device to execute the second aspect or any possible design of the second aspect.

According to a fifteenth aspect, a computer storage medium is provided. The computer storage medium is configured to store a computer software instruction used by the communications apparatus described in the seventh aspect or the communications apparatus described in the eleventh aspect, and includes a program designed for the network device to execute the first aspect or any possible design of the first aspect.

According to a sixteenth aspect, a computer storage medium is provided. The computer storage medium is configured to store a computer software instruction used by the communications apparatus described in the eighth aspect or the communications apparatus described in the twelfth aspect, and includes a program designed for the terminal device to execute the fourth aspect or any possible design of the fourth aspect.

According to a seventeenth aspect, a computer program product including an instruction is provided. When the computer program product is run on a computer, the computer performs the method in the first aspect or any possible design of the first aspect.

According to an eighteenth aspect, a computer program product including an instruction is provided. When the computer program product is run on a computer, the computer performs the method in the second aspect or any possible design of the second aspect.

According to a nineteenth aspect, a computer program product including an instruction is provided. When the computer program product is run on a computer, the computer performs the method in the third aspect or any possible design of the third aspect.

According to a twentieth aspect, a computer program product including an instruction is provided. When the computer program product is run on a computer, the computer performs the method in the fourth aspect or any possible design of the fourth aspect.

In the embodiments of the present invention, the network device may indicate, in the $n^{th}$ subframe, the quantity of downlink symbols included in the $(n+N)^{th}$ subframe, where N is greater than or equal to 2. In this way, it can be ensured that the terminal device demodulates the DCI in time, and a probability of system exception is reduced.

## BRIEF DESCRIPTION OF DRAWINGS

FIG. 1 is a schematic diagram of an application scenario according to an embodiment of the present invention;

FIG. 2 is a schematic diagram of extending a CPDCCH resource in a data region according to an embodiment of the present invention;

FIG. 3 is a schematic diagram of a processing process of a terminal device when DCI indicates a quantity of downlink symbols included in a next subframe according to an embodiment of the present invention;

FIG. 4 is a flowchart of a subframe configuration indication method according to an embodiment of the present invention;

FIG. 5 is a schematic diagram of a processing process of a terminal device when DCI indicates a quantity of downlink symbols included in an $(n+2)^{th}$ subframe according to an embodiment of the present invention;

FIG. 6 is a flowchart of a subframe configuration indication method according to an embodiment of the present invention; and

FIG. 7 to FIG. 11 are schematic structural diagrams of communications apparatuses according to embodiments of the present invention.

## DESCRIPTION OF EMBODIMENTS

To make the objectives, technical solutions, and advantages of the embodiments of the present invention clearer, the following clearly and completely describes the technical solutions of the embodiments of the present invention with reference to the accompanying drawings in the embodiments of the present invention.

The following describes some terms in the embodiments of the present invention, to facilitate understanding of a person skilled in the art.

(1) A terminal device is a device that provides voice and/or data connectivity for a user. For example, the terminal device may include a handheld device with a wireless connection function or a processing device connected to a wireless modem. The terminal device may communicate with a core network via a radio access network (Radio Access Network, RAN), and exchange voice and/or data with the RAN. The terminal device may include user equipment (User Equipment, UE), a wireless terminal device, a mobile terminal device, a subscriber unit (Subscriber Unit), a subscriber station (Subscriber Station), a mobile station (Mobile Station), a mobile (Mobile), a remote station (Remote Station), an access point (Access Point, AP), a remote terminal device (Remote Terminal), an access terminal device (Access Terminal), a user terminal device (User Terminal), a user agent (User Agent), a user device (User Device), or the like. For example, the terminal device may include a mobile phone (or referred to as a "cellular" phone), a computer with a mobile terminal device, a portable, pocket-sized, handheld, computer built-in, or vehicle-mounted mobile apparatus, or a smart wearable device. For example, the terminal device may be a device such as a personal communications service (Personal Communications Service, PCS) phone, a cordless phone, a session initiation protocol (SIP) phone, a wireless local loop (Wireless Local Loop, WLL) station, a personal digital assistant (Personal Digital Assistant, PDA), a smartwatch, a smart helmet, smart glasses, or a smart band.

The terminal device in the embodiments of the present invention may include a terminal device that supports MF release 1.0, referred to as an MF 1.0 terminal device hereinafter, or may include a terminal device that supports MF release 1.1, referred to as an MF 1.1 terminal device hereinafter. The MF 1.1 terminal device supports a WCE technology.

(2) A network device includes, for example, a base station (for example, an access point), and may be a device that communicates with a wireless terminal device over an air interface in an access network by using one or more sectors. The base station may be configured to mutually convert a received over-the-air frame and an Internet protocol (IP) packet, and serve as a router between the terminal device and a remaining part of the access network. The remaining part of the access network may include an IP network. The base station may further coordinate attribute management of the air interface. For example, the base station may include an evolved NodeB (NodeB, eNB, or e-NodeB, evolutional NodeB) in an LTE system or an LTE-advanced (LTE-Advanced, LTE-A) system, or may include a next generation node B (next generation node B, gNB) in a 5G system. This is not limited in the embodiments of the present invention.

(3) A special subframe. A terminal device performs downlink-to-uplink switch in the special subframe. Generally, the special subframe includes three parts: a downlink part, a guard period, and an uplink part.

(4) A complete subframe is a subframe in which a total quantity of included symbols is equal to a specified quantity of symbols included in one subframe in a protocol. Correspondingly, an incomplete subframe may be understood as a subframe in which a total quantity of included symbols is less than the specified quantity of symbols included in one subframe in the protocol. In addition, the incomplete subframe is different from the special subframe. A quantity of symbols included in the special subframe is generally equal to the specified quantity of symbols included in one subframe in the protocol.

(5) In an LTE/MF protocol, a downlink subframe is divided into a control region and a data region. The control region is used to carry a control channel, for example, a physical control format indicator channel (Physical Control Format Indicator Channel, PCFICH), a physical hybrid automatic repeat request indicator channel (Physical Hybrid Automatic Repeat-reQuest Indicator Channel, PHICH), a physical downlink control channel (Physical Downlink Control Channel, PDCCH), or a common physical downlink control channel (Common Physical Downlink Control Channel, CPDCCH). The data region is used to carry a data channel, for example, a physical downlink shared channel (Physical Downlink Shared Channel, PDSCH).

(6) A downlink control channel, used to carry control information. A type of the downlink control channel is not limited in this specification. For example, the downlink control channel may be a PDCCH, an enhanced physical downlink control channel (Enhanced Physical Downlink Control Channel, EPDCCH), or a CPDCCH, or may be another downlink control channel used to transmit the control information.

(7) A CPDCCH, as special common DCI, may be used to indicate information such as an uplink and downlink subframe configuration, and may not carry scheduling information of a PDSCH. A length of DCI carried on the CPDCCH is the same as a length of DCI 1C used to schedule the PDSCH. DCI used to schedule the PDSCH may be in a plurality of formats, and 1C is one of the plurality of formats. Specifically, in the MF protocol, the DCI carried on the CPDCCH includes the following information:

(1) a subframe configuration for licensed-assisted access or MF (Subframe configuration for LAA or MF) field, where the field usually occupies four bits (bits);
(2) an uplink transmission duration and offset indication (Uplink transmission duration and offset indication) field, where the field usually occupies five bits;
(3) a physical uplink shared channel (Physical Uplink Shared Channel, PUSCH) trigger (trigger) B field, where the field usually occupies one bit;
(4) an MF-enhanced physical uplink control channel trigger indication (Enhanced Physical Uplink Control Channel trigger indication, ePUCCH trigger indication) field, where the field is usually only for MF cells (only for MF cells), and the field usually occupies one bit; and
(5) a reserved (Reserved) field, where the field generally occupies four bits.

It can be learned that excluding the reserved field, the DCI that can be carried on the CPDCCH channel has a payload length of 11 bits. The reserved field is set to ensure that the length of the DCI carried on the CPDCCH is the same as a length of common DCI in the DCI 1C format. The common DCI in the DCI 1C format used to schedule the PDSCH channel includes payload information of 15 bits. Therefore, the reserved field of the CPDCCH is four bits, in other words, the reserved field is set for compatibility. The protocol specifies that the reserved field is preset to 0 when a network device sends a CPDCCH.

Only a value of the "subframe configuration for LAA or MF" field can indicate a quantity of downlink symbols included in a current subframe or a next subframe. Therefore, a terminal device may determine, by using the field, a quantity of downlink symbols included in a current subframe or a next subframe. If the quantity of downlink symbols included in the current subframe or the next subframe is less than a quantity of downlink symbols included in a complete subframe, the terminal device may determine that the current subframe or the next subframe is a special subframe or an incomplete subframe. If the current subframe or the next subframe is a special subframe, the terminal device may complete downlink-to-uplink switch in the special subframe. Table 1 shows a definition of the "subframe configuration for LAA or MF" field in an MF 1.0 protocol:

**Table 1**

| Value of a 'subframe configuration for LAA' field in a current subframe (Value of 'Subframe configuration for LAA' field in current subframe) | Configuration of occupied orthogonal frequency division multiplexing symbols (Configuration of occupied Orthogonal Frequency Division Multiplexing symbols) (Current subframe (current subframe), next subframe (next subframe)) |
|---|---|
| 0000 | (-, 14) |

(continued)

| Value of a 'subframe configuration for LAA' field in a current subframe (Value of 'Subframe configuration for LAA' field in current subframe) | Configuration of occupied orthogonal frequency division multiplexing symbols (Configuration of occupied Orthogonal Frequency Division Multiplexing symbols) (Current subframe (current subframe), next subframe (next subframe)) |
|---|---|
| 0001 | (-, 12) |
| 0010 | (-, 11) |
| 0011 | (-, 10) |
| 0100 | (-, 9) |
| 0101 | (-, 6) |
| 0110 | (-, 3) |
| 0111 | (14, *) |
| 1000 | (12, -) |
| 1001 | (11, -) |
| 1010 | (10, -) |
| 1011 | (9, -) |
| 1100 | (6, -) |
| 1101 | (3, -) |
| 1110 | Reserved |
| 1111 | Reserved |

For example, if a value of a subframe configuration for LAA or MF field in DCI sent by the base station in a first subframe is 0000, according to Table 1, it can be learned that the DCI indicates a quantity of downlink symbols included in a next subframe, and the quantity is 14.

It should be noted that in some scenarios, the CPDCCH channel may be equivalent to CPDCCH DCI. To be specific, the CPDCCH is special common DCI, and may be carried on a PDCCH channel, or may be carried on an EPDCCH channel. The CPDCCH channel is not limited to the PDCCH or the EPDCCH.

(8) The terms "system" and "network" may be used interchangeably in the embodiments of the present invention. The term "a plurality of" means "at least two". In view of this, "a plurality of' can be understood as "at least two" in the embodiments of the present invention. The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects.

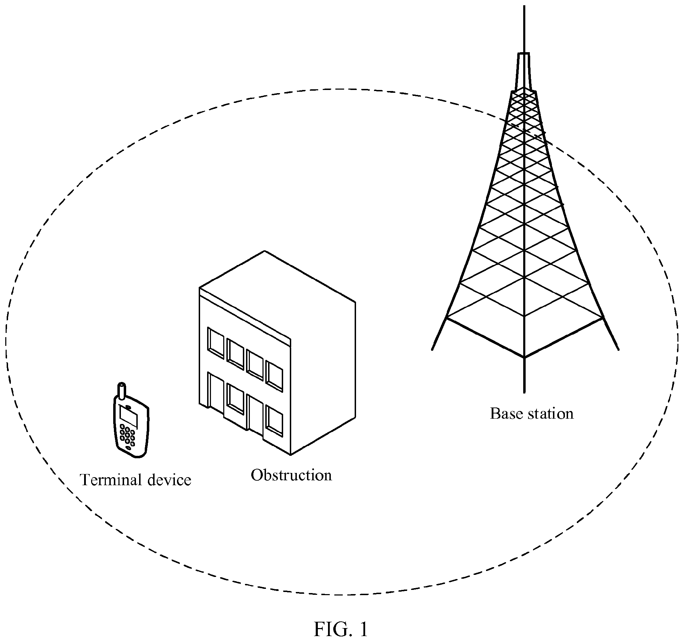

The foregoing describes some concepts involved in the embodiments of the present invention. The following describes an application scenario of the embodiments of the present invention. The embodiments of the present invention may be used for a system that needs coverage extension in MF. When MF is deployed on an unlicensed spectrum, there are some requirements for deep coverage. In this case, coverage extension needs to be performed, referring to FIG. 1. FIG. 1 shows a base station and a terminal device. It can be seen that there is an obstruction between the base station and the terminal device. Therefore, coverage extension needs to be performed. If coverage extension is not performed, the terminal device may be unable to receive or demodulate information sent by the base station.

The following describes how coverage extension is performed on a downlink control channel to ensure as much as possible that an MF 1.1 terminal device successfully demodulates DCI carried on the downlink control channel. In a description process herein, an example in which the downlink control channel is a CPDCCH is used.

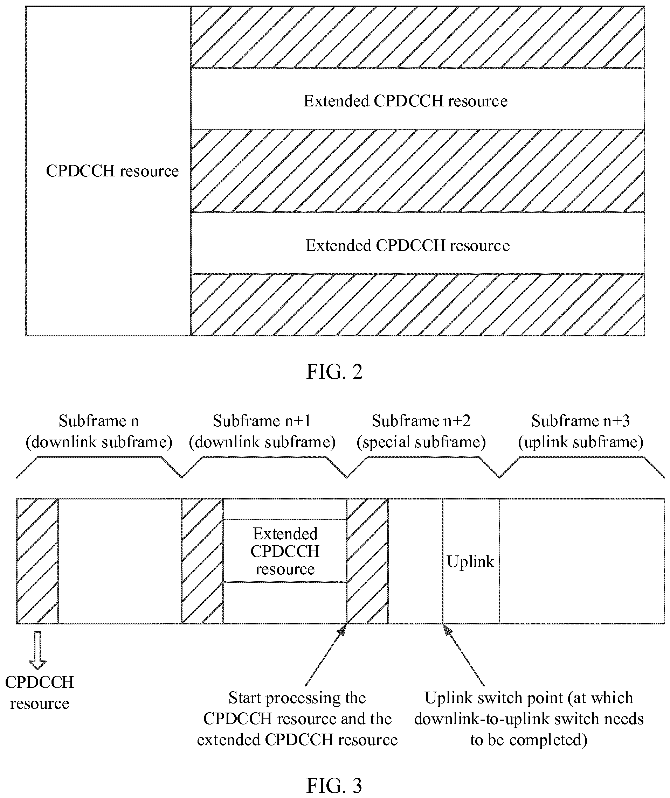

To perform coverage extension on the CPDCCH, in addition to that a CPDCCH resource is allocated in a control region, a CPDCCH resource is also allocated in a data region, referring to FIG. 2. In FIG. 2, a left box represents the control region, a right box represents the data region, and parts not marked with slashes in the data region are allocated CPDCCH resources. The CPDCCH resource allocated in the data region may be referred to as an extended CPDCCH resource. DCI may be carried in both the extended CPDCCH resource and the CPDCCH resource allocated in the control region. FIG. 2 shows an example in which two extended CPDCCH resources are allocated in the data region. However, a quantity of extended CPDCCH resources in an actual application is not limited to two.

In this manner, more physical resources are allocated to the CPDCCH, in other words, an aggregation level of the CPDCCH is increased. Because the aggregation level is increased, but a length of the DCI remains the same, it is equivalent to that a bit rate is reduced. Therefore, coverage extension is implemented. The aggregation level is a concept introduced for a PDCCH/EPDCCH. For example, if an aggregation level of a PDCCH/EPDCCH is 8, it represents that the PDCCH/EPDCCH occupies eight control channel elements (Control Channel Element, CCE)/enhanced control channel elements (Enhanced Control Channel Element, eCCE), approximately 72 resource elements (Resource Element, RE), on a time-frequency resource.

An MF 1.0 CPDCCH is used as an example. If an aggregation level is 8, it is equivalent to that $8\times72$ REs are allocated. A quantity of bits that can be carried by using a quadrature phase shift keying (Quadrature Phase Shift Keying, QPSK) modulation scheme is $8\times72\times2=1152$ bits, and a payload length of DCI 1C is 15 bits. In this case, after adding cyclic redundancy check (Cyclic Redundancy Check, CRC) whose length is 16 bits, a total length of information is 31 bits, and a bit rate is about $\dfrac{31}{8*72*2}=0.027$. This is far below a mother code rate of 0.33. Therefore, when resource extension continues to be performed on the CPDCCH, the bit rate of the CPDCCH may reduce further. If a CPDCCH in a control region and a CPDCCH in a data region carry DCI of same content, the DCI can be repeatedly sent for a plurality of times on a PDCCH in the control region and a PDCCH in the data region by performing rate matching. In this way, a success rate of receiving and demodulating the DCI by the terminal device is improved.

Therefore, by detecting a CPDCCH in a control region, an MF 1.0 terminal device may obtain information carried on the CPDCCH, for example, the DCI. The MF 1.1 terminal device may demodulate information carried on CPDCCHs, for example, DCI, by jointly using a CPDCCH in a control region and a CPDCCH in a data region. In this way, the MF 1.1 terminal device can be compatible with the MF 1.0 terminal device, and CPDCCH coverage extension is implemented. For example, an original aggregation level of a CPDCCH is 8. By performing resource extension on the CPDCCH in a data region, the aggregation level can be increased to 16. In this manner, the CPDCCH can be enhanced by 3 dB. Likewise, if the aggregation level of the CPDCCH is increased to 32, the CPDCCH can be enhanced by 6 dB.

As specified in the protocol, a complete sub frame generally includes 14 OFDM symbols. An OFDM symbol is referred to as a symbol in this specification. That is, a downlink symbol described in this specification may be a downlink OFDM symbol, and an uplink symbol may be an uplink OFDM symbol. If a quantity of downlink symbols in a subframe indicated by the CPDCCH is less than 14, the terminal device determines that the subframe is a special subframe or an incomplete subframe. If the subframe is a special subframe, the terminal device needs to complete downlink-to-uplink switch on the special subframe. Further, if the terminal device determines that a quantity of uplink symbols included in the special subframe is greater than or equal to 4, the terminal device may send a short physical uplink control channel (Short Physical Uplink Control Channel, sPUCCH) or a short physical random access channel (Short Physical Random Access Channel, sPRACH) in the uplink symbols in the special subframe.

As described above, in the DCI carried on the CPDCCH, the "subframe configuration for LAA or MF" field is used to indicate the quantity of downlink symbols included in the current subframe or the next subframe. In other words, an MF 1.0 network device indicates a quantity of downlink symbols included in a special subframe at most one subframe in advance.

Referring to FIG. 3, the network device sends a CPDCCH one subframe in advance, for example, sending the CPDCCH in a subframe n+1. Because the CPDCCH is extended in the entire subframe n+1 for sending, the MF 1.1 terminal device cannot process a CPDCCH resource and an extended CPDCCH resource until a start point of a subframe n+2. If the subframe n+2 is a special subframe, the MF 1.1 terminal device is required to complete processing before an uplink switch point of the special subframe. Considering impact of an algorithm, a latency, or the like, this manner requires a relatively high processing capability of the MF 1.1 terminal device and poses a relatively great challenge to reducing costs of the terminal device. In other words, if the CPDCCH is enhanced only in this manner without considering the processing capability of the terminal device, even if the MF 1.1 terminal device can demodulate the CPDCCH correctly, the MF 1.1 terminal device may miss an effective time point of the CPDCCH, that is, the uplink switch point of the special subframe, and does not perform downlink-to-uplink switch at a correct location. Consequently, system exception is caused.

In view of this, in the embodiments of the present invention, the network device may indicate, in an $n^{th}$ subframe, a quantity of downlink symbols included in an $(n+N)^{th}$ subframe, where N is greater than or equal to 2. In this way, it can be ensured as much as possible that the terminal device demodulates the DCI in time, and a probability of system exception is reduced.

With reference to the accompanying drawings, the following describes the technical solutions provided in the embodiments of the present invention. An example is used in the following description, and in the example, the technical solutions provided in the embodiments of the present invention are applied to the application scenario shown in FIG. 1, the network device is a base station, and the downlink control channel is a CPDCCH. In actual application, the present invention is certainly not limited thereto.

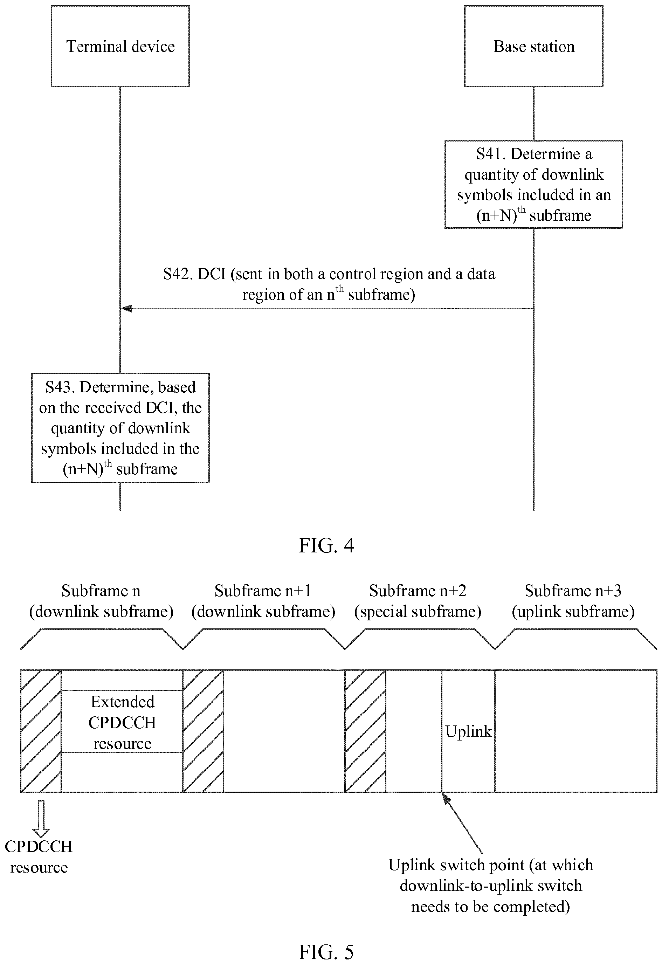

Referring to FIG. 4, an embodiment of the present invention provides a subframe configuration indication method. A procedure of the method is described as follows.

S41. Abase station determines, within a period of time for which the base station continuously occupies a channel, a quantity of downlink symbols included in an $(n+N)^{th}$ subframe, where n is an integer greater than or equal to 0 and N is an integer greater than or equal to 2. The period of time herein may be duration for which the base station can occupy the channel. For example, when the base station needs to preempt a channel, if the base station successfully preempts the channel, the base station occupies the channel. However, after occupying the channel for a period of time, for example, 8 ms or 10 ms, the base station needs to release the channel. If the base station still needs to use the channel, the base station needs to preempt the channel again. Therefore, in this embodiment of the present invention, the base station may implement the method provided in the embodiment shown in FIG. 4 in a process of occupying the channel, provided that both an $n^{th}$ subframe and the $(n+N)^{th}$ subframe are within a time range of occupying the channel by the base station. The duration for which the base station occupies the channel is related to a specification in a standard or a protocol. This is not limited in this embodiment of the present invention.

An interval between the $(n+N)^{th}$ subframe and the $n^{th}$ subframe is N. The $(n+N)^{th}$ subframe may be a complete subframe, or may be an incomplete subframe, or may be a special subframe. In other words, the quantity of downlink symbols included in the $(n+N)^{th}$ subframe may be less than a first preset threshold, or may be equal to a first preset threshold. This is not limited in this embodiment of the present invention. The first preset threshold is a specified quantity of symbols included in a complete subframe in a protocol, and the complete subframe herein may be a complete downlink subframe. In other words, the first preset threshold may also be understood as a specified total quantity of symbols included in a complete subframe in the protocol. For example, usually, the first preset threshold is 14, or may be 12, or may be another specified value.

S42. The base station sends, in both a control region and a data region of the $n^{th}$ subframe, DCI through CPDCCHs. A terminal device receives, in both the control region and the data region of the $n^{th}$ subframe through the CPDCCHs, the DCI sent by the base station. The DCI sent by the base station may be used to indicate the quantity of downlink symbols included in the $(n+N)^{th}$ subframe.

In an implementation, when determining that the $(n+N)^{th}$ subframe is a special subframe or an incomplete subframe, the base station may send, in both the control region and the data region, the DCI to the terminal device through the CPDCCHs. In this way, the terminal device can identify in time the quantity of downlink symbols included in the $(n+N)^{th}$ subframe, to perform corresponding processing. If the base station determines that the $(n+N)^{th}$ subframe is a complete subframe, the base station may send, in both the control region and the data region, the DCI to the terminal device through the CPDCCHs, or may not send the DCI to the terminal device. The base station may perform a specific operation according to a specification in the protocol or the standard, or based on a configuration of the base station.

In another implementation, when determining that an $(n+N+1)^{th}$ subframe is an uplink subframe, the base station may send, in both the control region and the data region, the DCI to the terminal device through the CPDCCHs. In particular, if the $(n+N+1)^{th}$ subframe is an uplink subframe, there may be one or more consecutive uplink subframes following the uplink subframe. That is, the consecutive uplink subframes start from the $(n+N+1)^{th}$ subframe. A first complete uplink subframe firstly sent and subsequent consecutive uplink subframes are referred to as a UL burst. In this case, when determining that the $(n+N+1)^{th}$ subframe is an uplink subframe, the base station may send, in both the control region and the data region, the DCI to the terminal device through the CPDCCHs. Alternatively, when determining that there is a UL burst, the base station may send, in both the control region and the data region, the DCI to the terminal device through the CPDCCHs. A first uplink subframe included in the UL burst is the $(n+N+1)^{th}$ subframe. In other words, if the $(n+N+1)^{th}$ subframe is an uplink subframe, the $(n+N+1)^{th}$ subframe may be a separate uplink subframe, or may be one subframe of a UL burst, because a subframe followed by an uplink subframe or a UL burst is usually a special subframe. That is, if the base station determines that the $(n+N+1)^{th}$ subframe is an uplink subframe or a first uplink subframe included in the UL burst, it is determined that the $(n+N)^{th}$ subframe is a special subframe. In this case, the base station may send, in both the control region and the data region of the $n^{th}$ subframe, the DCI to the terminal device through the CPDCCHs.

DCI sent by the base station in the control region and DCI sent by the base station in the data region are in a same format, for example, a DCI 1C format. That is, the DCI sent in the control region and the DCI sent in the data region have a same length. In this case, an MF 1.0 terminal device directly demodulates only the DCI received from the control region, and an MF 1.1 terminal device demodulates both the DCI received from the control region and the DCI received from the data region. That is, requirements of terminal devices of different types can be met.

S43. The terminal device determines, based on the received DCI, the quantity of downlink symbols included in the $(n+N)^{th}$ subframe.

In this embodiment of the present invention, the DCI sent by the base station needs to indicate the quantity that is determined by the base station and that is of downlink symbols included in the $(n+N)^{th}$ subframe. Based on the foregoing description of the fields included in the DCI, it can be learned that the DCI includes a reserved field that has not been used. Therefore, in this embodiment of the present invention, the reserved field in the DCI is used to indicate the quantity of downlink symbols included in the $(n+N)^{th}$ subframe. In this way, the quantity of downlink symbols included in the $(n+N)^{th}$ subframe is indicated without affecting other information originally carried in the DCI, and the field in the DCI is more effectively used and resource utilization is improved. The following describes a manner of indicating, by using the reserved field in the DCI, the quantity of downlink symbols included in the $(n+N)^{th}$ subframe.

As described above, the reserved field of the DCI occupies four bits. Therefore, the base station may use at least one of the four bits occupied by the reserved field to indicate the quantity of downlink symbols included in the $(n+N)^{th}$ subframe. As an example, the base station may use information of three bits in the four bits occupied by the reserved field to indicate the quantity of downlink symbols included in the $(n+N)^{th}$ subframe. In this specification, a bit field of the three bits is referred to as a "subframe configuration for WCE (Subframe configuration for WCE)".

For better understanding, Table 2 is provided below to describe how the quantity of downlink symbols included in the $(n+N)^{th}$ subframe is indicated by using the subframe configuration for WCE field. It should be noted that content included in Table 2 is merely an example and is not limited to this setting manner in an actual application, and all manners of indicating, by using the subframe configuration for WCE field, the quantity of downlink symbols included in the $(n+N)^{th}$ subframe fall within the protection scope of this embodiment of the present invention.

**Table 2**

| Subframe configuration for WCE (subframe number (subframe number): n) | Configuration of occupied OFDM symbols (Configuration of occupied OFDM symbols) (subframe number: n+N) |
|---|---|
| 000 | 14 |
| 001 | 12 |
| 010 | 11 |
| 011 | 10 |
| 100 | 9 |
| 101 | 6 |
| 110 | 3 |

For example, if a value of the subframe configuration for WCE field in the DCI is 000, according to Table 2, it can be learned that the quantity of downlink symbols included in the $(n+N)^{th}$ subframe is 14.

It can be learned from the foregoing description that in this embodiment of the present invention, the DCI carried on the CPDCCH includes the following fields:

a 4-bit subframe configuration for LAA or MF field;
a 5-bit uplink transmission duration and offset indication field;
a 1-bit PUSCH trigger B field;
a 1-bit MF-ePUCCH trigger indication (only for MF cells) field;
the 3-bit subframe configuration for WCE field; and
the 1-bit reserved field.

In an implementation, N is a fixed value, for example, N=2. That is, provided that the base station sends, in the $n^{th}$ subframe, the DCI through the CPDCCHs, the sent DCI is a fixed indication of a quantity of downlink symbols included in an $(n+2)^{th}$ subframe. Therefore, provided that the terminal device receives the DCI sent by the base station through the CPDCCHs, the terminal device may learn that the subframe configuration for WCE field in the DCI indicates the quantity of downlink symbols included in the $(n+2)^{th}$ subframe. In other words, provided that the terminal device receives the DCI sent by the base station through the CPDCCHs, the terminal device may determine a location of a subframe indicated by the DCI. Therefore, in this case, the subframe configuration for WCE field implicitly indicates a location of the $(n+N)^{th}$ subframe. If the $(n+2)^{th}$ subframe is a special subframe, the terminal device can determine when to perform downlink receiving-to-uplink sending switch. Referring to FIG. 5, the base station sends a CPDCCH two subframes in advance, for example, sending the CPDCCH in the subframe n. Even if the CPDCCH is extended in the entire subframe n for sending, and even if the $(n+2)^{th}$ subframe is a special subframe, the MF 1.1 terminal device has time to complete processing before an uplink switch point of the special subframe.

In another implementation, N is not a fixed value. For example, if the base station sends the DCI to the terminal device through the CPDCCHs when determining that the $(n+N+1)^{th}$ subframe is one subframe of a UL burst, N may not be a fixed value. For example, when determining that an $(n+2+1)^{th}$ subframe is one subframe of a UL burst, the base station sends the DCI to the terminal device through the CPDCCHs, and in this case, N=2. However, next time when determining that an $(n+3+1)^{th}$ subframe is one subframe of a UL burst, the base station may send the DCI to the terminal device through the CPDCCHs, and in this case, N is equal to 3. Therefore, in this case, it is obvious that the terminal device can determine, by using the subframe configuration for WCE field, only the quantity of downlink symbols included in the $(n+N)^{th}$ subframe, but cannot determine the location of the $(n+N)^{th}$ subframe based on the subframe configuration for WCE field, that is, cannot determine the value of N.

To resolve this problem, in this embodiment of the present invention, another field included in the DCI is also used. For example, the uplink transmission duration and offset indication field included in the DCI is also used. The base station indicates the location of the $(n+N)^{th}$ subframe by using the uplink transmission duration and offset indication field, that is, indicates the value of N by using the uplink transmission duration and offset indication field. Specifically, the base station may indicate the location of the $(n+N)^{th}$ subframe by using uplink subframe offset information in the uplink transmission duration and offset indication field.

For better understanding, Table 3 is provided below to describe how the location of the $(n+N)^{th}$ subframe is indicated by using the uplink transmission duration and offset indication field. It should be noted that content included in Table 3 is merely an example and is not limited to this setting manner in an actual application, and all manners of indicating, by using the uplink transmission duration and offset indication field, the location of the $(n+N)^{th}$ subframe fall within the protection scope of this embodiment of the present invention.

**Table 3**

| Value of a subframe configuration for LAA field in a current subframe(Value of 'UL configuration for LAA' field) | Uplink offset (UL offset)$^l$ in subframes (in subframes) | Uplink duration (UL duration) $^d$ in subframes (in subframes) |
|---|---|---|
| 00000 | Not configured (Not configured) | Not configured |
| 00001 | 1 | 1 |
| 00010 | 1 | 2 |
| 00011 | 1 | 3 |
| 00100 | 1 | 4 |
| 00101 | 1 | 5 |
| 00110 | 1 | 6 |
| 00111 | 2 | 1 |
| 01000 | 2 | 2 |
| 01001 | 2 | 3 |
| 01010 | 2 | 4 |
| 01011 | 2 | 5 |
| 01100 | 2 | 6 |
| 01101 | 3 | 1 |
| 01110 | 3 | 2 |
| 01111 | 3 | 3 |
| 10000 | 3 | 4 |
| 10001 | 3 | 5 |
| 10010 | 3 | 6 |
| 10011 | 4 | 1 |
| 10100 | 4 | 2 |
| 10101 | 4 | 3 |
| 10110 | 4 | 4 |
| 10111 | 4 | 5 |

(continued)

| Value of a subframe configuration for LAA field in a current subframe(Value of 'UL configuration for LAA' field) | Uplink offset (UL offset)$^l$ in subframes (in subframes) | Uplink duration (UL duration) $^d$ in subframes (in subframes) |
|---|---|---|
| 11000 | 4 | 6 |
| 11001 | 6 | 1 |
| 11010 | 6 | 2 |
| 11011 | 6 | 3 |
| 11100 | 6 | 4 |
| 11101 | 6 | 5 |
| 11110 | 6 | 6 |
| 11111 | Reserved | Reserved |

For example, if a value of the uplink transmission duration and offset indication field in the DCI is 00111, according to Table 3, it can be learned that a UL offset may be understood as the uplink subframe offset information, and specifically, a value of the UL offset may be understood as a value of N+1 in n+N+1. In Table 3, if the value of the UL offset is 2, that is, N+1=2, it indicates that N=1. In this case, the DCI indicates a quantity of downlink symbols included in a next subframe of the $n^{th}$ subframe. In addition, when a value of UL duration is 1, it indicates that duration of the UL burst is one subframe. For another example, if a value of the uplink transmission duration and offset indication field in the DCI is 01000, according to Table 3, it can be learned that a value of a UL offset is 2, that is, it indicates that N=1. In this case, the DCI indicates a quantity of downlink symbols included in a next subframe of the $n^{th}$ subframe. In addition, when a value of UL duration is 2, it indicates that duration of the UL burst is two subframes. It can be learned from Table 3 that in this embodiment of the present invention, the base station sends the CPDCCH in the $n^{th}$ subframe, the quantity that is of downlink symbols and that is determined by using the subframe configuration for WCE field in the DCI on the CPDCCH sent by the base station in the $n^{th}$ subframe is corresponding to a quantity of downlink symbols in a subframe followed by a subframe indicated by the UL offset in the uplink transmission duration and offset indication field. The value of the UL offset should be greater than or equal to 3 as much as possible, that is, the value of N indicated by the UL offset should be greater than or equal to 2 as much as possible.

It can be learned that if the value of N is not fixed, after receiving the DCI sent by the base station through the CPDCCHs, the terminal device may determine the quantity of downlink symbols included in the $(n+N)^{th}$ subframe by using the subframe configuration for WCE field in the DCI, and determine the location of the $(n+N)^{th}$ subframe by using the uplink transmission duration and offset indication field in the DCI. Therefore, the base station may configure, two or more subframes in advance, the quantity of downlink symbols that is indicated by the DCI, that is, notify the terminal device a specific quantity of subframes in advance, where the specific quantity of subframes is not limited to two. This is more flexible for the network device.

In conclusion, in this embodiment of the present invention, the network device indicates, in the $n^{th}$ subframe, the quantity of downlink symbols included in the $(n+N)^{th}$ subframe, where N is greater than or equal to 2. In this way, it can be ensured as much as possible that the terminal device demodulates the DCI in time, and a probability of system exception is reduced.

In the embodiment shown in FIG. 4, in addition to that an MF 1.0 CPDCCH resource is configured in a control region, an MF 1.0 CPDCCH resource is extended in a data region. In this way, it can ensure that an MF 1.0 terminal device continues to detect a CPDCCH in the control region, and that an MF 1.1 terminal device demodulates DCI by using both the CPDCCH resource in the control region and the extended CPDCCH resource in the data region. Therefore, the embodiment shown in FIG. 4 can be compatible with the MF1.0 terminal device, and the MF 1.1 terminal device can also use the MF 1.0 CPDCCH resource. In this way, utilization of a time-frequency resource is maximized.

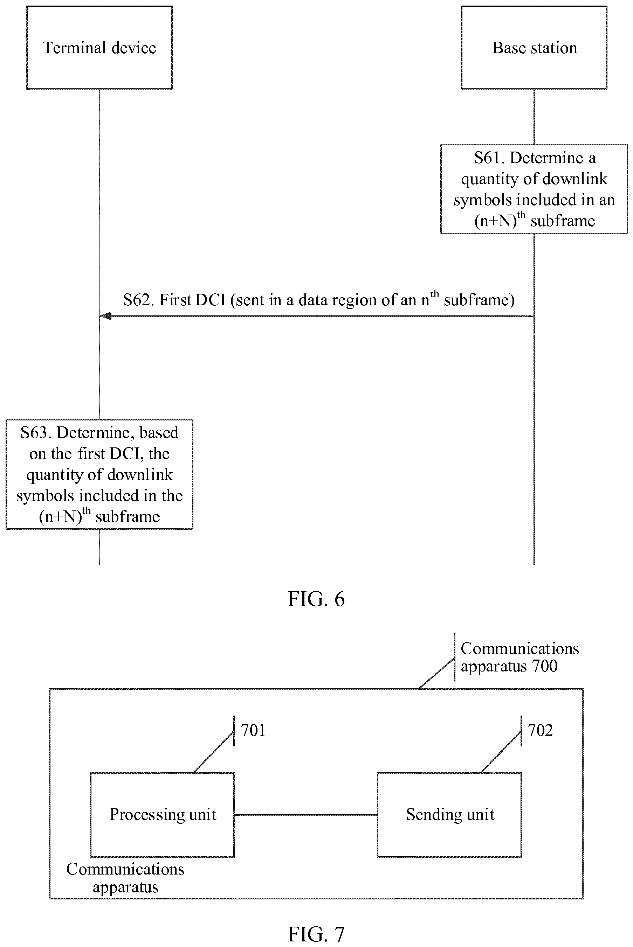

The following describes another embodiment of the present invention. This embodiment provides another subframe configuration indication method, referring to FIG. 6. In this embodiment, a base station allocates same or different CPDCCH DCI to an MF 1.1 terminal device and an MF 1.0 terminal device. A case in which the base station allocates different DCI to the MF 1.1 terminal device and the MF 1.0 terminal device is mainly described. In other words, the base station separately allocates, in a data region, a CPDCCH resource to the MF 1.1 terminal device to carry DCI to be sent to the MF 1.1 terminal device. Herein, the different DCI mainly means DCI of different formats. Therefore, the DCI allocated to the MF 1.1 terminal device is no longer compatible with DCI allocated to the MF 1.0 terminal device. In this case, the MF 1.1 terminal device cannot use a CPDCCH resource of the MF 1.0 terminal device any longer. For convenience of description, the CPDCCH separately allocated to the MF 1.1 terminal device in the data region is referred to as an enhanced common physical downlink control channel (enhanced Common Physical Downlink Control Channel, ECPDCCH) or an enhanced physical downlink control channel (enhanced Physical Downlink Control Channel, EPDCCH).

S61. The base station determines a quantity of downlink symbols included in an $(n+N)^{th}$ sub frame, where N is an integer greater than or equal to 2.

The $(n+N)^{th}$ subframe may be a complete subframe, or may be an incomplete subframe, or may be a special subframe. In other words, the quantity of downlink symbols included in the $(n+N)^{th}$ subframe may be less than a first preset threshold, or may be equal to a first preset threshold. This is not limited in this embodiment of the present invention. The first preset threshold is a specified quantity of downlink symbols included in one complete subframe in a protocol, and the complete subframe herein may be a complete downlink subframe. In other words, the first preset threshold may also be understood as a specified total quantity of symbols included in a complete subframe in the protocol. For example, in LTE/MF, for a normal cyclic prefix (Normal Cyclic Prefix, NCP) subframe, the first preset threshold is usually 14, for an extended cyclic prefix (Extended Cyclic Prefix, ECP) subframe, the first preset threshold is usually 12, and in another system, the first preset threshold may also be specified as another value. 12 or 14 herein is merely an example and is a quantity that is determined based on a subframe of a different type and that is of symbols included in a complete subframe. When types of subframes are different, a value of the first preset threshold may be different, and may be specifically determined according to a protocol or a standard. This is not limited in this embodiment of the present invention.

S62. The base station sends, in a data region of an $n^{th}$ subframe, CPDCCH DCI through an EPDCCH, and the terminal device receives, through the EPDCCH in the data region of the $n^{th}$ subframe, the CPDCCH DCI sent by the base station. The DCI is referred to as first DCI hereinafter. The DCI sent by the base station may be used to indicate the quantity of downlink symbols included in the $(n+N)^{th}$ subframe.

In this embodiment of the present invention, it is equivalent to that a format of DCI is redesigned for the MF 1.1 terminal device, and it is not necessary to consider that the DCI needs to be compatible with the MF 1.0 terminal device. In this case, when sending the DCI, the base station may consider terminal devices of different types. For example, when needing to send DCI to the MF 1.0 terminal device, the base station may send the DCI to the MF 1.0 terminal device through a CPDCCH in a control region, and the CPDCCH DCI sent in the control region is referred to as second DCI hereinafter. When needing to send DCI to the MF 1.1 terminal device, the base station may send first DCI to the MF 1.1 terminal device through a CPDCCH in a data region. The first DCI and the second DCI may be sent in one subframe, for example, the $n^{th}$ subframe, or may be sent in different subframes. Sending times and a sending sequence of the first DCI and the second DCI are not limited in this embodiment of the present invention.

For the MF 1.1 terminal device, the quantity of downlink symbols included in the $(n+N)^{th}$ subframe can be determined by receiving the first DCI carried on the CPDCCH in the data region. For the MF 1.0 terminal device, the second DCI carried on the CPDCCH in the control region may be received. If the base station indicates, by using the second DCI, the quantity of downlink symbols included in the $(n+N)^{th}$ subframe, the MF 1.0 terminal device may determine, based on the second DCI, the quantity of downlink symbols included in the $(n+N)^{th}$ subframe. If the base station indicates, by using the second DCI, a quantity of downlink symbols included in a current subframe or a next subframe, the MF 1.0 terminal device may determine, based on the second DCI, the quantity of downlink symbols included in the current subframe or the next subframe. That is, a specific subframe whose quantity of included downlink symbols is indicated by the second DCI is not limited in this embodiment of the present invention.

In this embodiment of the present invention, a format of the first DCI is different from a format of the second DCI. The format of the second DCI may be the DCI format described in the term (7) in the embodiments of the present invention, or may be the DCI format described in the embodiment shown in FIG. 4. This is not limited herein.

The following describes the format of the first DCI, that is, describes fields included in the first DCI. In an implementation, the first DCI may include the following fields:

a subframe configuration for LAA or MF field;
an uplink transmission duration and offset indication field;
a PUSCH trigger B field; and
an MF-ePUCCH trigger indication (only for MF cells) field.

For quantities of bits occupied by the uplink transmission duration and offset indication field, the PUSCH trigger B field, and the MF-ePUCCH trigger indication (only for MF cells) field, refer to the DCI described above. Details are not described. In this embodiment of the present invention, the subframe configuration for LAA or MF field may be used to indicate the quantity of downlink symbols included in the $(n+N)^{th}$ subframe. It can be learned from the manner of indicating, by using the subframe configuration for WCE field, the quantity of downlink symbols included in the $(n+N)^{th}$ subframe in the embodiment shown in FIG. 4, in the first DCI, the subframe configuration for LAA or MF field may also occupy only three bits, or may occupy less than three bits. A specific quantity of occupied bits is related to an indication manner.

In other words, a quantity of bits that are in the first DCI and that are used to indicate the quantity of downlink symbols included in the (n+N)$^{th}$ subframe is less than a second preset threshold. The second preset threshold may be a quantity of bits occupied by the subframe configuration for LAA or MF field in DCI compatible with the MF 1.0 terminal device, for example, four.

In addition, it can be seen that the first DCI does not include a reserved field. The reason is that the reserved field is reserved in the DCI described in the embodiment shown in FIG. 4 and the DCI described in the term (7) in the embodiments of the present invention for compatibility consideration, that is, for compatibility with the MF 1.0 terminal device. However, in this embodiment of the present invention, compatibility is no longer considered. Therefore, the reserved field does not need to be kept in the first DCI. Therefore, the subframe configuration for LAA or MF field in the first DCI may occupy only three bits, or occupy less than three bits, and the reserved field does not need to be reserved. In this way, a length of the first DCI is greatly reduced compared with a length of other DCI described above. For example, when the subframe configuration for LAA or MF field occupies three bits, the length of the first DCI is only 10 bits. Compared with a length of 15 bits of the other DCI described above, a payload length is reduced by 30%. Therefore, resource waste is reduced and a bit rate is reduced. Further, coverage extension can be implemented.

S63. The terminal device determines, based on first DCI, the quantity of downlink symbols included in the (n+N)$^{th}$ subframe.

The foregoing describes the fields included in the first DCI, and also describes how the first DCI indicates the quantity of downlink symbols included in the (n+N)$^{th}$ subframe. After receiving the first DCI, the terminal device can determine, based on the first DCI, the quantity of downlink symbols included in the (n+N)$^{th}$ subframe.

The apparatuses provided in the embodiments of the present invention are described below with reference to the accompanying drawings.

FIG. 7 is a schematic structural diagram of a communications apparatus 700. The communications apparatus 700 may implement the functions of the foregoing network device. The communications apparatus 700 may include a processing unit 701 and a sending unit 702. The processing unit 701 may be configured to perform S41 in the embodiment shown in FIG. 4, and/or support another process of the technology described in this specification. The sending unit 702 may be configured to perform S42 in the embodiment shown in FIG. 4, and/or support another process of the technology described in this specification. All the related content of the steps in the foregoing method embodiments may be cited in function descriptions of corresponding function modules. Details are not described herein again.

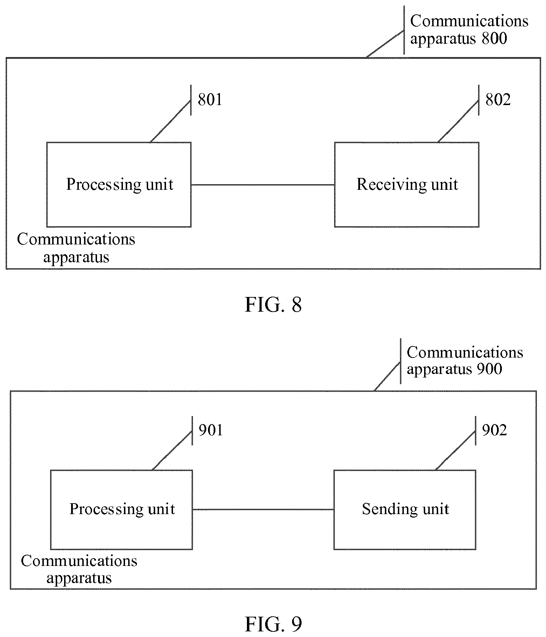

FIG. 8 is a schematic structural diagram of a communications apparatus 800. The communications apparatus 800 may implement the functions of the foregoing network device. The communications apparatus 800 may include a processing unit 801 and a receiving unit 802. The processing unit 801 may be configured to perform S43 in the embodiment shown in FIG. 4, and/or support another process of the technology described in this specification. The receiving unit 802 may be configured to perform S42 in the embodiment shown in FIG. 4, and/or support another process of the technology described in this specification. All the related content of the steps in the foregoing method embodiments may be cited in function descriptions of corresponding function modules. Details are not described herein again.

FIG. 9 is a schematic structural diagram of a communications apparatus 900. The communications apparatus 900 may implement the functions of the foregoing network device. The communications apparatus 900 may include a processing unit 901 and a sending unit 902. The processing unit 901 may be configured to perform S61 in the embodiment shown in FIG. 6, and/or support another process of the technology described in this specification. The sending unit 902 may be configured to perform S62 in the embodiment shown in FIG. 6, and/or support another process of the technology described in this specification. All the related content of the steps in the foregoing method embodiments may be cited in function descriptions of corresponding function modules. Details are not described herein again.

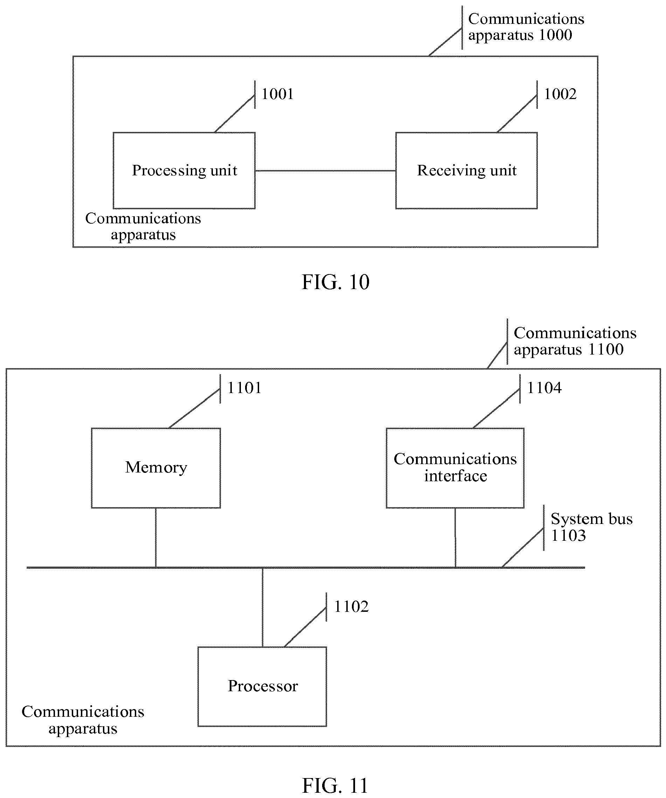

FIG. 10 is a schematic structural diagram of a communications apparatus 1000. The communications apparatus 1000 may implement the functions of the foregoing network device. The communications apparatus 1000 may include a processing unit 1001 and a receiving unit 1002. The processing unit 1001 may be configured to perform S63 in the embodiment shown in FIG. 6, and/or support another process of the technology described in this specification. The receiving unit 1002 may be configured to perform S62 in the embodiment shown in FIG. 6, and/or support another process of the technology described in this specification. All the related content of the steps in the foregoing method embodiments may be cited in function descriptions of corresponding function modules. Details are not described herein again.

In the embodiments of the present invention, the communications apparatus 700 to the communications apparatus 1000 are presented in a form in which the function modules are classified based on corresponding functions, or may be presented in a form in which the function modules are classified in an integrated manner. The "module" herein may be an application-specific integrated circuit (application-specific integrated circuit, ASIC), a processor and a memory that execute one or more software or firmware programs, an integrated logic circuit, and/or another component that can provide the functions.

In a simple embodiment, a person skilled in the art can figure out that any one of the communications apparatus 700 to the communications apparatus 1000 may also be implemented by using a structure shown in FIG. 11.

## EP 3 606 279 A1

As shown in FIG. 11, the communications apparatus 1100 may include a memory 1101, a processor 1102, a system bus 1103, and a communications interface 1104. The processor 1102, the memory 1101, and the communications interface 1104 are connected by using the system bus 1103. The memory 1101 is configured to store a computer executable instruction. When the communications apparatus 1100 is run, the processor 1102 executes the computer executable instruction stored in the memory 1101, so that the communications apparatus 1100 executes the subframe configuration indication method provided in the embodiment shown in FIG. 4 or the embodiment shown in FIG. 6. For a specific subframe configuration indication method, refer to the foregoing descriptions and related descriptions in the accompanying drawings. Details are not described herein again. The communications interface 1104 may be a transceiver, or a separate receiver and a separate transmitter.

In an example, the sending unit 702 may be corresponding to the communications interface 1104 in FIG. 11. The processing unit 701 may be built/embedded in or independent of the memory 1101 of the communications apparatus 1100 in a form of hardware/software.

In an example, the receiving unit 802 may be corresponding to the communications interface 1104 in FIG. 11. The processing unit 801 may be built/embedded in or independent of the memory 1101 of the communications apparatus 1100 in a form of hardware/software.

In an example, the sending unit 902 may be corresponding to the communications interface 1104 in FIG. 11. The processing unit 901 may be built/embedded in or independent of the memory 1101 of the communications apparatus 1100 in a form of hardware/software.

In an example, the receiving unit 1002 may be corresponding to the communications interface 1104 in FIG. 11. The processing unit 1001 may be built/embedded in or independent of the memory 1101 of the communications apparatus 1100 in a form of hardware/software.

Optionally, the communications apparatus 1100 may be a field-programmable gate array (field-programmable gate array, FPGA), an application-specific integrated circuit (application specific integrated circuit, ASIC), a system on chip (system on chip, SoC), or a central processing unit (central processor unit, CPU), a network processor (network processor, NP), a digital signal processing circuit (digital signal processor, DSP), a micro controller (micro controller unit, MCU), or a programmable controller (programmable logic device, PLD) or another integrated chip. Alternatively, the communications apparatus 1100 may be a separate network element, such as a network device or a terminal device.

Because the communications apparatus 700 to the communications apparatus 1100 provided in the embodiments of the present invention may be configured to perform the foregoing communication method, for technical effects that can be obtained by the communications apparatus 700 to the communications apparatus 1100, refer to the foregoing method embodiments. Details are not described again herein.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to the embodiments of the present invention are generated. The computer may be a general-purpose computer, a dedicated computer, a computer network, or other programmable apparatuses. The computer instructions may be stored in a computer readable storage medium or may be transmitted from a computer readable storage medium to another readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (Solid State Disk, SSD)), or the like.

## Claims

1. A subframe configuration indication method, comprising:

   determining, by a network device, a quantity of downlink symbols comprised in an $(n+N)^{th}$ subframe, wherein n is an integer greater than or equal to 0, and N is an integer greater than or equal to 2; and
   sending, by the network device in both a control region and a data region of an $n^{th}$ subframe, downlink control information DCI through downlink control channels, wherein the DCI is used to indicate the quantity of downlink symbols comprised in the $(n+N)^{th}$ subframe.

2. The method according to claim 1, wherein the DCI indicates, by using a reserved bit in the DCI, the quantity of downlink symbols comprised in the $(n+N)^{th}$ subframe.

3. The method according to claim 1 or 2, wherein the quantity of downlink symbols comprised in the $(n+N)^{th}$ subframe is less than a first preset threshold, wherein the first preset threshold is a quantity of downlink symbols comprised in one complete subframe.

4. The method according to claim 3, wherein the one complete subframe is an extended cyclic prefix subframe, and in this case, the first preset threshold is 12; or the one complete subframe is a normal cyclic prefix subframe, and in this case, the first preset threshold is 14.

5. The method according to any one of claims 1 to 4, wherein the method further comprises:
determining, by the network device, that an $(n+N+1)^{th}$ subframe is an uplink subframe.

6. A subframe configuration indication method, comprising:

receiving, by a terminal device in both a control region and a data region of an $n^{th}$ subframe, downlink control information DCI through downlink control channels, wherein n is an integer greater than or equal to 0; and
determining, by the terminal device based on the DCI, a quantity of downlink symbols comprised in an $(n+N)^{th}$ sub frame, wherein N is an integer greater than or equal to 2.

7. The method according to claim 6, wherein the determining, by the terminal device based on the DCI, a quantity of downlink symbols comprised in an $(n+N)^{th}$ subframe comprises:
determining, by the terminal device based on an indication of a reserved bit in the DCI, the quantity of downlink symbols comprised in the $(n+N)^{th}$ subframe.

8. The method according to claim 6 or 7, wherein the method further comprises:
determining, by the terminal device, a location of the $(n+N)^{th}$ subframe based on uplink subframe offset information carried in the DCI, wherein the uplink subframe offset information is used to indicate a value of N.

9. The method according to any one of claims 6 to 8, wherein the quantity of downlink symbols comprised in the $(n+N)^{th}$ subframe is less than a first preset threshold, wherein the first preset threshold is a quantity of downlink symbols comprised in one complete subframe.

10. The method according to claim 9, wherein the one complete subframe is an extended cyclic prefix subframe, and in this case, the first preset threshold is 12; or the one complete subframe is a normal cyclic prefix subframe, and in this case, the first preset threshold is 14.

11. The method according to any one of claims 6 to 10, wherein the method further comprises:
determining, by the terminal device, that an $(n+N+1)^{th}$ subframe is an uplink subframe.

12. A subframe configuration indication method, comprising:

determining, by a network device, a quantity of downlink symbols comprised in an $(n+N)^{th}$ subframe, wherein n is an integer greater than or equal to 0, and N is an integer greater than or equal to 2; and
sending, by the network device in a data region of an $n^{th}$ subframe, first DCI through a downlink control channel, wherein the first DCI is used to indicate the quantity of downlink symbols comprised in the $(n+N)^{th}$ subframe.

13. The method according to claim 12, wherein a quantity of bits that are in the first DCI and that are used to indicate the quantity of downlink symbols comprised in the $(n+N)^{th}$ subframe is less than a second preset threshold.

14. The method according to claim 12 or 13, wherein the method further comprises:
sending, by the network device in a control region of the $n^{th}$ subframe, second DCI through a downlink control channel, wherein the first DCI and the second DCI are in different formats.

15. The method according to claim 14, wherein a length of the first DCI is less than a length of the second DCI.

16. A subframe configuration indication method, comprising:

receiving, by a terminal device in a data region of an $n^{th}$ subframe through a downlink control channel, first downlink control information DCI sent by a network device, wherein n is an integer greater than or equal to 0; and determining, by the terminal device based on the first DCI, a quantity of downlink symbols comprised in an $(n+N)^{th}$ subframe, wherein N is an integer greater than or equal to 2.

17. The method according to claim 16, wherein the method further comprises:
determining, by the terminal device, a location of the $(n+N)^{th}$ subframe based on uplink subframe offset information carried in the first DCI, wherein the uplink subframe offset information is used to indicate a value of N.

18. The method according to claim 16 or 17, wherein a quantity of bits that are in the first DCI and that are used to indicate the quantity of downlink symbols comprised in the $(n+N)^{th}$ subframe is less than a second preset threshold.

19. The method according to any one of claims 16 to 18, wherein the method further comprises:
receiving, by the terminal device in a control region of the $n^{th}$ subframe through a downlink control channel, second DCI sent by the network device, wherein the first DCI and the second DCI are in different formats.

20. The method according to claim 19, wherein a length of the first DCI is less than a length of the second DCI.

21. A communications apparatus, comprising:

a processing unit, configured to determine a quantity of downlink symbols comprised in an $(n+N)^{th}$ subframe, wherein n is an integer greater than or equal to 0, and N is an integer greater than or equal to 2; and
a sending unit, configured to send, in both a control region and a data region of an $n^{th}$ subframe, downlink control information DCI through downlink control channels, wherein the DCI is used to indicate the quantity of downlink symbols comprised in the $(n+N)^{th}$ subframe.

22. The apparatus according to claim 21, wherein the DCI indicates, by using a reserved bit in the DCI, the quantity of downlink symbols comprised in the $(n+N)^{th}$ subframe.

23. The apparatus according to claim 21 or 22, wherein the quantity of downlink symbols comprised in the $(n+N)^{th}$ subframe is less than a first preset threshold, wherein the first preset threshold is a quantity of downlink symbols comprised in one complete subframe.

24. The apparatus according to claim 23, wherein the one complete subframe is an extended cyclic prefix subframe, and in this case, the first preset threshold is 12; or the one complete subframe is a normal cyclic prefix subframe, and in this case, the first preset threshold is 14.

25. The apparatus according to any one of claims 21 to 24, wherein the processing unit is further configured to:
determine that an $(n+N+1)^{th}$ subframe is an uplink subframe.

26. A communications apparatus, comprising:

a receiving unit, configured to receive, in both a control region and a data region of an $n^{th}$ subframe, downlink control information DCI through downlink control channels, wherein n is an integer greater than or equal to 0; and
a processing unit, configured to determine, based on the DCI, a quantity of downlink symbols comprised in an $(n+N)^{th}$ subframe, wherein N is an integer greater than or equal to 2.

27. The apparatus according to claim 26, wherein that the processing unit is configured to determine, based on the DCI, the quantity of downlink symbols comprised in the $(n+N)^{th}$ subframe comprises:
determining, based on an indication of a reserved bit in the DCI, the quantity of downlink symbols comprised in the $(n+N)^{th}$ subframe.

28. The apparatus according to claim 26 or 27, wherein the processing unit is further configured to:
determine a location of the $(n+N)^{th}$ subframe based on uplink subframe offset information carried in the DCI, wherein the uplink subframe offset information is used to indicate a value of N.

29. The apparatus according to any one of claims 26 to 28, wherein the quantity of downlink symbols comprised in the $(n+N)^{th}$ subframe is less than a first preset threshold, wherein the first preset threshold is a quantity of downlink symbols comprised in one complete subframe.

30. The apparatus according to claim 29, wherein the one complete subframe is an extended cyclic prefix subframe, and in this case, the first preset threshold is 12; or the one complete subframe is a normal cyclic prefix subframe, and in this case, the first preset threshold is 14.

31. The apparatus according to any one of claims 26 to 30, wherein the processing unit is further configured to: determine that an $(n+N+1)^{th}$ subframe is an uplink subframe.

32. A communications apparatus, comprising:

   a processing unit, configured to determine a quantity of downlink symbols comprised in an $(n+N)^{th}$ subframe, wherein n is an integer greater than or equal to 0, and N is an integer greater than or equal to 2; and
   a sending unit, configured to send, in a data region of an $n^{th}$ subframe, first DCI through a downlink control channel, wherein the first DCI is used to indicate the quantity of downlink symbols comprised in the $(n+N)^{th}$ subframe.

33. The apparatus according to claim 32, wherein a quantity of bits that are in the first DCI and that are used to indicate the quantity of downlink symbols comprised in the $(n+N)^{th}$ subframe is less than a second preset threshold.

34. The apparatus according to claim 32 or 33, wherein the sending unit is further configured to: send, in a control region of the $n^{th}$ subframe, second DCI through a downlink control channel, wherein the first DCI and the second DCI are in different formats.

35. The apparatus according to claim 34, wherein a length of the first DCI is less than a length of the second DCI.

36. A communications apparatus, comprising:

   a receiving unit, configured to receive, in a data region of an $n^{th}$ subframe through a downlink control channel, first downlink control information DCI sent by a network device, wherein n is an integer greater than or equal to 0; and
   a processing unit, configured to determine, based on the first DCI, a quantity of downlink symbols comprised in an $(n+N)^{th}$ subframe, wherein N is an integer greater than or equal to 2.

37. The apparatus according to claim 36, wherein the processing unit is further configured to: determine a location of the $(n+N)^{th}$ subframe based on uplink subframe offset information carried in the first DCI, wherein the uplink subframe offset information is used to indicate a value of N.

38. The apparatus according to claim 36 or 37, wherein a quantity of bits that are in the first DCI and that are used to indicate the quantity of downlink symbols comprised in the $(n+N)^{th}$ subframe is less than a second preset threshold.

39. The apparatus according to any one of claims 36 to 38, wherein the receiving unit is further configured to: receive, in a control region of the $n^{th}$ subframe through a downlink control channel, second DCI sent by the network device, wherein the first DCI and the second DCI are in different formats.

40. The apparatus according to claim 39, wherein a length of the first DCI is less than a length of the second DCI.

41. A computer readable storage medium, wherein the computer readable storage medium comprises an instruction, and when the instruction is run on a computer, the computer performs the method according to any one of claims 1 to 5.

42. A computer readable storage medium, wherein the computer readable storage medium comprises an instruction, and when the instruction is run on a computer, the computer performs the method according to any one of claims 6 to 11.

43. A computer readable storage medium, wherein the computer readable storage medium comprises an instruction, and when the instruction is run on a computer, the computer performs the method according to any one of claims 12 to 15.

44. A computer readable storage medium, wherein the computer readable storage medium comprises an instruction, and when the instruction is run on a computer, the computer performs the method according to any one of claims 16 to 20.

Terminal device      Obstruction      Base station

FIG. 1

FIG. 2

Subframe n
(downlink subframe)

Subframe n+1
(downlink subframe)

Subframe n+2
(special subframe)

Subframe n+3
(uplink subframe)

Extended
CPDCCH
resource

Uplink

CPDCCH
resource

Start processing the
CPDCCH resource and the
extended CPDCCH resource

Uplink switch point (at which
downlink-to-uplink switch needs
to be completed)

FIG. 3

```
┌──────────────────┐                          ┌──────────────────┐
│  Terminal device │                          │   Base station   │
└────────┬─────────┘                          └────────┬─────────┘
         │                                              │
         │                          ┌───────────────────┴──────────────┐
         │                          │  S41. Determine a                │
         │                          │  quantity of downlink            │
         │                          │  symbols included in an          │
         │                          │  $(n+N)^{th}$ subframe           │
         │                          └───────────────────┬──────────────┘
         │                                              │
         │  S42. DCI (sent in both a control region and a data         │
         │          region of an $n^{th}$ subframe)                    │
         │ ◄────────────────────────────────────────────│
         │                                              │
┌────────┴─────────┐                                    │
│ S43. Determine, based                                 │
│ on the received DCI, the                              │
│ quantity of downlink                                  │
│ symbols included in the                               │
│ $(n+N)^{th}$ subframe │                               │
└────────┬─────────┘                                    │
         │                                              │
```

FIG. 4

Subframe n          Subframe n+1          Subframe n+2          Subframe n+3
(downlink subframe)  (downlink subframe)  (special subframe)    (uplink subframe)

Extended
CPDCCH
resource

Uplink

CPDCCH
resource

Uplink switch point (at which
downlink-to-uplink switch
needs to be completed)

FIG. 5

| Terminal device | | Base station |
|---|---|---|

S61. Determine a quantity of downlink symbols included in an $(n+N)^{th}$ subframe

S62. First DCI (sent in a data region of an $n^{th}$ subframe)

S63. Determine, based on the first DCI, the quantity of downlink symbols included in the $(n+N)^{th}$ subframe

FIG. 6

Communications apparatus 700

Processing unit 701 — Sending unit 702

Communications apparatus

FIG. 7

Communications
apparatus 800

801

Processing unit

802

Receiving unit

Communications
apparatus

FIG. 8

Communications
apparatus 900

901

Processing unit

902

Sending unit

Communications
apparatus

FIG. 9

Communications
apparatus 1000

| 1001 | 1002 |
| --- | --- |
| Processing unit | Receiving unit |

Communications
apparatus

FIG. 10

Communications
apparatus 1100

| 1101 | 1104 |
| --- | --- |
| Memory | Communications interface |

System bus
1103

| 1102 |
| --- |
| Processor |

Communications
apparatus

FIG. 11

# INTERNATIONAL SEARCH REPORT

International application No.

PCT/CN2017/080965

## A. CLASSIFICATION OF SUBJECT MATTER

H04W 72/04 (2009.01) i; H04W 76/04 (2009.01) i

According to International Patent Classification (IPC) or to both national classification and IPC

## B. FIELDS SEARCHED

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 数据, 控制, 域, MF 联盟, 宽带覆盖增强, 子帧, 个数, 下行链路控制信息, 完整, 特殊, 公共物理下行控制信道, downlink control information, domain, MFA, data, DCI, multefire alliance, subframe, number, CPDCCH, WCE, MF1.0, MF1.1, control, wideband coverage extension, entire, special

## C. DOCUMENTS CONSIDERED TO BE RELEVANT

| Category* | Citation of document, with indication, where appropriate, of the relevant passages | Relevant to claim No. |
|---|---|---|
| A | CN 105722229 A (BAICELLS TECHNOLOGY CO., LTD.) 29 June 2016 (29.06.2016), description, paragraphs [0063]-[0069] | 1-44 |
| A | CN 105657852 A (BAICELLS TECHNOLOGY CO., LTD.) 08 June 2016 (08.06.2016), entire document | 1-44 |
| A | CN 105704829 A (APPLE INC) 22 June 2016 (22.06.2016), entire document | 1-44 |
| A | US 2016234694 A1 (KYOCERA CORPORATION) 11 August 2016 (11.08.2016), entire document | 1-44 |
| A | Intel Corporation. Common PDCCH Design. 3GPP R1-167692, 26 August 2016 (26.08.2016), entire document | 1-44 |
| A | LG Electronics. Discussion on NR DCI Design 3GPP R1-1700496, 20 January 2017 (20.01.2017), entire document | 1-44 |

☐ Further documents are listed in the continuation of Box C.     ☒ See patent family annex.

| | |
|---|---|
| *   Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&" document member of the same patent family |

| Date of the actual completion of the international search | Date of mailing of the international search report |
|---|---|
| 24 November 2017 | 16 January 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>CHEN, Gang<br><br>Telephone No. (86-10) 62413331 |

Form PCT/ISA /210 (second sheet) (July 2009)

## INTERNATIONAL SEARCH REPORT
### Information on patent family members

| | International application No. |
|---|---|
| | PCT/CN2017/080965 |

| Patent Documents referred in the Report | Publication Date | Patent Family | Publication Date |
|---|---|---|---|
| CN 105722229 A | 29 June 2016 | WO 2017133440 A1 | 10 August 2017 |
| CN 105657852 A | 08 June 2016 | WO 2017133441 A1 | 10 August 2017 |
| CN 105704829 A | 22 June 2016 | DE 102015222734 A1 | 16 June 2016 |
| | | US 2016174280 A1 | 16 June 2016 |
| | | JP 2016129328 A | 14 July 2016 |
| US 2016234694 A1 | 11 August 2016 | WO 2015046271 A1 | 02 April 2015 |
| | | JP 2015070282 A | 13 April 2015 |

Form PCT/ISA /210 (patent family annex) (July 2009)